# EUROPEAN PATENT APPLICATION

(11) **EP 1 420 530 A2**
(43) Date of publication of application: **19.05.2004**
(21) Application number: 04002201.4
(22) Date of filing: 21.02.1996
(51) Int. Cl.: H04H 1/00

(54) **Method for transmitting hyper-text documents to a receiver and corresponding receiver**

(30) Priority: 09.03.1995 FI 951106
(62) Divisional of application: 96102567.3
(71) Applicant: NOKIA TECHNOLOGY GmbH, 44807 Bochum (DE)
(72) Inventor: Rinne, Mika, 02320 Espoo (FI); Salomäki, Ari, 33710 Tampere (FI); Rissanen, Kari, 02760 Espoo (FI)
(74) Representative: Nordin, Leif

(57) **Abstract**

Disclosed is a method and a receiver to be used in a transmission and identification of a hyper-text document to said receiver, wherein the transmission of a packet channel is demodulated in a demodulator (25) into sequential sub-channel signals (26-31), and each of said sequential signals is divided into sub-channels in a demultiplexer (32). Each sub-channel having a data flow and packet address associated therewith, and said packet channel is further divided into elements with the aid of an identifier field, so that the data contents of each element is separately identified with the aid of the identifier field, which identifies its information contents. An instruction for generating the document transferred in a packet channel describes how the hyper-text document is generated from its elements by linking the elements.

## Description

The object of the invention is a transmission and identification system, which is used to transfer and to generate a hyper-text document and a hyper-media service to a mobile, a portable or a stationary receiver.

A hyper-text document or a hyper-media document is a means to present information, which can contain picture, audio or text information, so that a link can be formed from the data fields to other fields in the same document or in a totally different document. A hypertext document differs from a normal file, particularly due to its flexible and versatile structure. The structure of a hyper-text document is treated in more detail e.g. in the patent publications EP-483 576, EP-483 577 and EP-551 696.

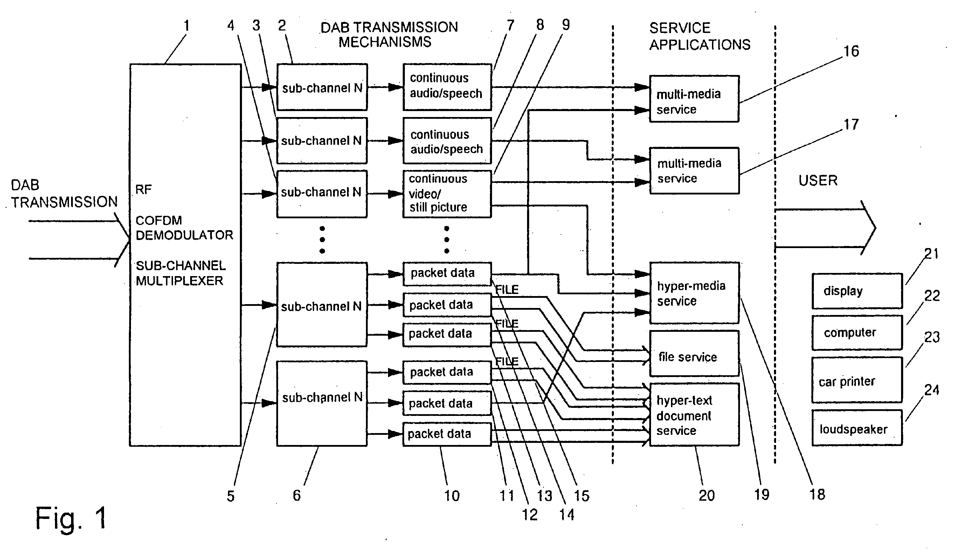

The prior art is described with reference to the enclosed figure 1, which shows the structure of a prior art DAB system.

The DAB transmission arrives first at the demodulator/demultiplexer 1, which then divides the transmission into the sub-channels 2 to 6. A fully digital transmission channel 2-6 can be either continuous communication (stream) or packet communication (packet). A continuous communication means for instance an audio/speech signal 7, a data signal 8, and a still picture or video signal 9. The packet communication is more flexible and presents a possibility to transmit more easily information units with a finite length. The packet communication blocks are shown at the numerals 10 to 15. Multi-media service blocks are shown at the numerals 16 to 17, a hyper-media service block at the numeral 18, a file based service at the numeral 19, and a hyper-text document service at the numeral 20.

In practice it has not been possible to realize transmission of a hyper-text document to a mobile user, because suitable transmission methods with their special requirements have not been available. A user display is shown at the numeral 21, a computer at the numeral 22, a car printer at the numeral 23, and a loudspeaker at the numeral 24.

The transmission of a hyper-text document to a mobile receiver has not succeeded through other systems, because the required data flow is extensive, there must be a flexible way to select parts from the data flow, and the data flow must be without errors.

The invention relates to a transmission and identification system, which is used to transfer and to generate a hyper-text document and a hyper-media service to a mobile, a portable or a stationary receiver. Furthermore, the invention relates to a new digital audio system (DAB). The DAB system defines a digital radio channel based on several carriers, so that the radio channel is suitable for the transmission of both audio and data services.

It is an object of the present invention to provide a method to be used in a transmission and identification system of a hyper-text document to a receiver, wherein the transmission of a packet channel is demodulated in a demodulator into sequential sub-channel signals, and each of said sequential signals is divided into sub-channels in a demultiplexer, each sub-channel having a data flow and packet address associated therewith, characterized in that said packet channel is further divided into elements with the aid of an identifier field, so that the data contents of each element is separately identified with the aid of the identifier field, which identifies its information contents unequivocally, and that an instruction for generating the document transferred in a packet channel describes how the hyper-text document is generated from its elements by linking the elements.

The invention also provides a receiver to be used when implementing the method.

The invention is described in detail below with reference to the enclosed figures, in which:
- figure 1: shows the structure of a prior art DAB system;
- figure 2: is a layout diagram showing a method according to the invention for the transmission of a hyper-text document to a mobile receiver;
- figure 3: indicates how the invention is used for generating the hyper-text document.

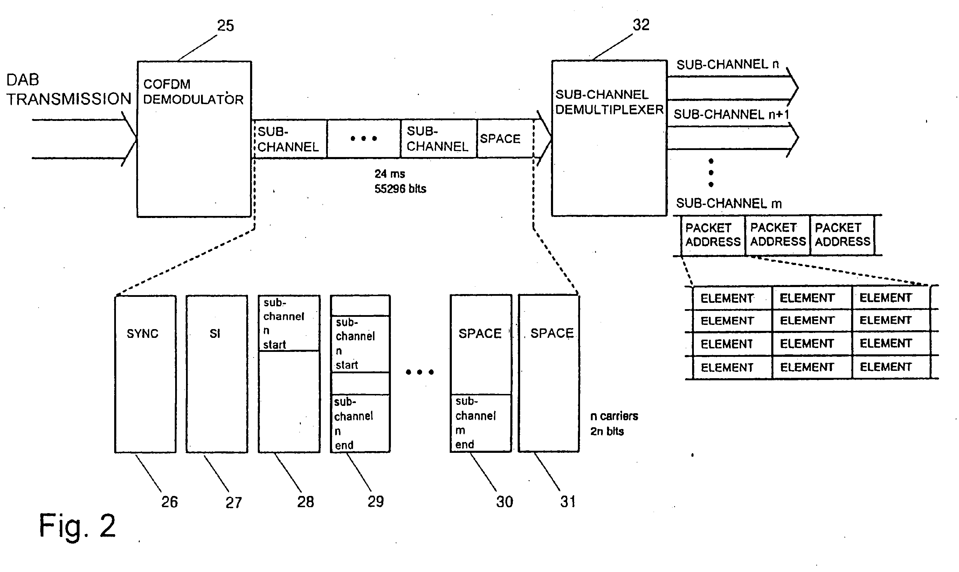

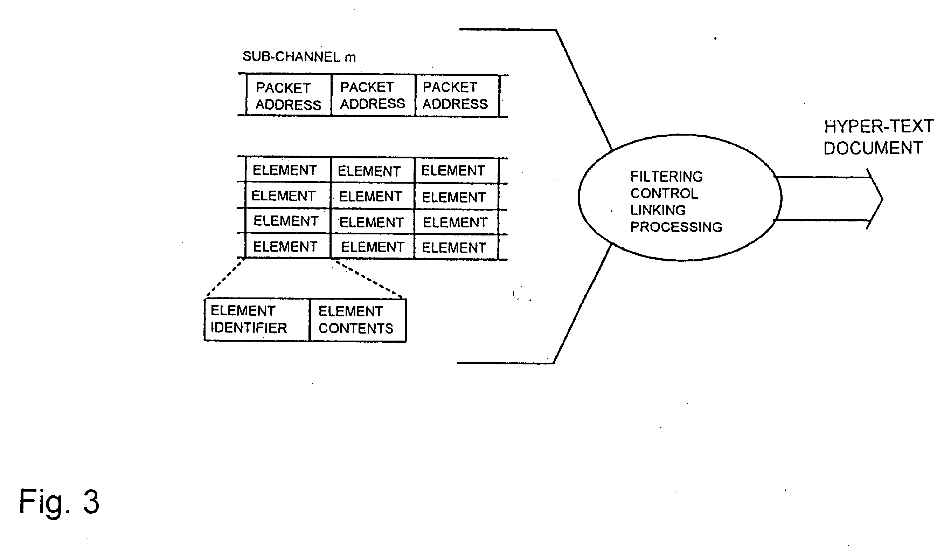

The figure 1 was described above. The solution according to the invention is described below with reference to the figures 2 and 3, which show an embodiment of the solution according to the invention.

Figure 2 shows the method according to the invention for the transmission of a hyper-text document to a mobile receiver. In this embodiment of the invention a DAB transmission of the packet channel is demodulated in the demodulator 25 into sequential sub-channel signals 26-31. Then the signal is divided into subchannels in the demultiplexer 32.

In the method according to the invention the data channel or the data flow contained in the packet address is further divided into elements with the aid of an identifier field, so that the data contents of each element can be separately identified with the aid of the identifier field, which identifies its information contents unequivocally.

Figure 3 shows the method according to the invention for generating the hyper-text document. The instruction for generating the document transmitted in the packet channel describes how the document is generated from its elements by linking the elements. It is also possible to present alternative ways to generate the document. Thus the receiver program can selectively select the elements which it requires. The decision criterion could be the receiver's ability to process and display pictures, for instance. Just as well the decision criterion could be the language or the version number of the text contained in the element.

A notable fact in the invention is that the sub-field of the packet channel is not used to indicate receiver groups or a single receiver, but explicitly to identify the internal elements of the document. Essentially the document comprises elements to be linked together, and thus it is not a question of data which is transmitted as separate services.

With the aid of the transmission and identification method according to the invention the elements of the document can be transferred in parallel in the service channel, so that the receiver's program can sort out the required elements from the incoming data channel. The method specifically operates on the packet channel. The extended identification field of the element enables a more accurate allocation than the accurate packet address.

The final document is formed to a whole by combining the information contents of the elements with the aid of the control parameters. The elements can contain picture, voice or data signals. Control parameters define whether the elements are interchangeable, consecutive, excluding, or whether the occurrence of an element requires the parallel presence of certain other elements. The elements are temporal, in other words they have a finite length, and they can be represented as files.

The application program can utilize the elements in different ways. A document can be assembled in the computer's memory or on its fixed disk, and stored for display.

Alternatively the document may be assembled on one page at a time to be displayed to the user.

The solution according to the invention for the transmission of combinations of different picture, voice and data services can be utilized in numerous applications. Examples of the services could be the yellow pages picture index, service station directories, lists of passenger bulletins, and directories of hotels and restaurants. Other applications could be newspapers and comic books.

## Claims

1. A method to be used in a transmission and identification system of a hyper-text document to a receiver, wherein the transmission of a packet channel is demodulated in a demodulator (25) into sequential sub-channel signals (26-31), and each of said sequential signals is divided into sub-channels in a demultiplexer (32), each sub-channel having a data flow and packet address associated therewith, **characterized in that**
said packet channel is further divided into elements with the aid of an identifier field, so that the data contents of each element is separately identified with the aid of the identifier field, which identifies its information contents unequivocally, and that an instruction for generating the document transferred in a packet channel describes how the hyper-text document is generated from its elements by linking the elements.

2. A method according to claim 1, **characterized in that** the required elements are selectively selected by the receiver program.

3. A method according to claim 2, **characterized in that** in the selection the receiver program uses as a decision criterion the receiver's ability to process and display pictures.

4. A method according to claim 2, **characterized in that** in the selection the receiver program uses as a decision criterion the language of the text contained in the element.

5. A method according to claim 2, **characterized in that** in the selection the receiver program uses as a decision criterion the version number of the text contained in the element.

6. A method according to any of the previous claims, **characterized in that** the sub-field of the packet channel is used to identify the internal elements of the document.

7. A method according to claim 6, **characterized in that** the final document is formed to a whole by combining the information contents of the elements with the aid of control parameters.

8. A method according to claim 7, **characterized in that** the control parameters define whether the elements are interchangeable, consecutive, excluding, or whether the occurrence of an element requires the parallel presence of certain other elements.

9. A method according to claim 8, **characterized in that** a document is assembled in a computer's memory and stored for display.

10. A method according to claim 8, **characterized in that** a document is assembled on one page at a time to be displayed to the user.

11. A method according to claim 1, **characterized in that** the document or service is output for instance to a printer, on a PC, in a TV, by a multi-media communications device, or by a speech synthesizer.

12. A method according to any of the previous claims, **characterized in that** the receiver is mobile, portable or stationary receiver.

13. A receiver to be used in a system to transfer and to generate a hyper-text document and a hyper-media service to a receiver, wherein the transmission of a packet channel received by the receiver is demodulated in a demodulator (25) into sequential sub-channel signals (26-31), and each of said sequential signals is divided into sub-channels in a demultiplexer (32), each sub-channel having a data flow and packet address associated therewith, **characterized in that**
said packet channel received by the receiver is further divided into elements with the aid of an identifier field, so that the data contents of each element is separately identified with the aid of the identifier field, which identifies its information contents unequivocally, and that an instruction for generating the document transferred in a packet channel describes how the hyper-text document and service is generated from its elements by linking the elements.
